# EUROPEAN PATENT APPLICATION

(11) **EP 4 847 986 A1**
(43) Date of publication of application: **02.12.2026**
(21) Application number: 26180274.8
(22) Date of filing: 21.05.2026
(51) Int. Cl.: G02B 27/01, G02B 27/00

(54) **OPTICAL APPARATUS FOR AUGMENTED REALITY CAPABLE OF REALIZING THREE-DIMENSIONAL STEREOSCOPIC IMAGES AND APPLICATION THEREOF**

(30) Priority: 27.05.2025 KR 20250068943; 01.04.2026 KR 20260058924
(71) Applicant: Sekonix Co., Ltd., Dongducheon-si, Gyeonggi-do 11307 (KR)
(72) Inventor: KIM, Jin Ho, 16817 GYEONGGI-DO (KR); HONG, Seung Ki, 16699 GYEONGGI-DO (KR); OH, Jin Tek, 11307 GYEONGGI-DO (KR); ROH, Ji Hyung, 16698 GYEONGGI-DO (KR)
(74) Representative: Cabinet Beaumont

(57) **Abstract**

Disclosed are an optical apparatus for augmented reality (AR) capable of realizing three-dimensional stereoscopic images and application thereof. The optical apparatus includes a plurality of image forming devices configured to form a plurality of first images and an augmented reality optical system configured to transmit the first images and a second image, which is an external image viewed by a user, to an ocular organ of the user, wherein the augmented reality optical system includes an optical waveguide having an incident surface on which the first images are incident, at least one reflective mirror configured to reflect the first images into the optical waveguide, and at least one partial mirror having characteristics of transmitting the first images and the second image, the partial mirror being configured to reflect and transmit the first images, which are reflected by the reflective mirror and transmitted through the optical waveguide, to the ocular organ.

## Description

### CROSS REFERENCE TO RELATED APPLICATION

The present application claims priority to Korean Patent Application Nos. 10-2025-0068943 and 10-2026-0058924, filed May 27, 2025 and April 1, 2026 respectively, the entire contents of which are incorporated herein for all purposes by this reference.

### BACKGROUND OF THE INVENTION

### 1. Field of the invention

The present invention relates to an optical apparatus and application thereof, and more particularly to an optical apparatus for augmented reality and application thereof.

A Korean national and development project supported by the Korean government associated with the present invention is described below:
Project Unique Number : 2410002411
Project Serial Number : 00453508
Government Department : MOTIE (Ministry of Trade, Industry and Energy)
Specialized Institution for Project Management : KEIT (Korea Planning & Evaluation of Industrial Technology)
Title of Research Program : Development of Materials and Components (R&D)
Title of Project : Technology development of qHD grade ultra-small projection optical engine for AR and 4K grade Pancake type light optical module for MR
Performing Institute : SEKONIX CO., LTD.
Research Period : July 1, 2024 ~ December 31, 2027

### 2. Description of the Related Art

With the development of electronic devices and display apparatuses capable of implementing virtual reality (VR), interest in this field is growing. Technologies (methods) capable of realizing augmented reality (AR) and mixed reality (MR) are also being researched as the next step beyond virtual reality (VR). Unlike virtual reality (VR), which is based on a fully virtual world, augmented reality (AR) is a display technology that further enhances the perception of reality by overlaying (or combining) virtual objects or information onto the real-world environment. While virtual reality (VR) is limited to fields such as gaming and virtual experiences, augmented reality (AR) has the advantage of being applicable to a wide variety of real-world environments. In particular, augmented reality (AR) is gaining attention as a next-generation display technology suitable for ubiquitous environments and the Internet of Things (IoT). Such augmented reality (AR) may be considered an example of mixed reality (MR) because augmented reality (AR) blends the real world with additional information (the virtual world).

Apparatuses that implement augmented reality (AR) include an apparatus using diffractive optics and an apparatus using geometric optics. While there are various optical systems available for this purpose, the following limitations exist depending on an AR lens method.

In the case of a diffractive waveguide method used to implement augmented reality (AR), the diffraction characteristics differ by wavelength when displaying color images, leading to chromatic aberration caused by diffraction, and there are limitations in securing a sufficient field of view (angle of view).

In the case of birdbath optics, the limitations on lens thickness when used as an AR lens lead to discomfort during outdoor wear, and issues with see-through characteristics arise when the apparatus is inactive due to brightness problems.

In the case of PinTILT optics, the lens thickness is limited to ensure product performance due to an optical design that avoids the use of a pin mirror, and there are aesthetic and design limitations due to coating of the pin mirror and a collimator mirror. Furthermore, in this regard, problems with see-through characteristics occur when AR is not active.

Therefore, there is a need to develop an optical apparatus for augmented reality (AR) capable of remedying and overcoming the shortcomings and problems of the aforementioned conventional methods. For example, there is a need to develop an optical apparatus for augmented reality (AR) capable of reducing the thickness of a lens, securing excellent see-through characteristics, resolving chromatic aberration issues (i.e., color reproduction issues), and securing a wide field of view, and related technologies. In addition, there is a need to develop an optical apparatus for augmented reality (AR) capable of realizing three-dimensional stereoscopic images configured to provide a sense of depth and a stereoscopic effect similar to the real world, thereby enhancing immersion, and to more intuitively present complex information or structures, and related technologies.

### SUMMARY OF THE INVENTION

The present invention has been made to remedy and overcome the shortcomings and problems of the aforementioned conventional methods, and it is an object of the present invention to provide an optical apparatus for augmented reality (AR) capable of realizing three-dimensional stereoscopic images with superior performance.

It is another object of the present invention to provide an optical apparatus for augmented reality (AR) capable of realizing three-dimensional stereoscopic images configured to reduce the thickness of a lens, to secure excellent see-through characteristics, to resolve chromatic aberration issues (i.e., color reproduction issues), and to secure a wide field of view (angle of view).

It is a further object of the present invention to provide an electronic device/system to which the optical apparatus for augmented reality (AR) capable of realizing three-dimensional stereoscopic images is applied.

The objects of the present invention are not limited to the above objects, and other unmentioned objects will be understood by those skilled in the art based on the following description.

In accordance with an embodiment of the present invention, the above and other objects can be accomplished by the provision of an optical apparatus for augmented reality (AR), the optical apparatus including a plurality of image forming devices configured to form a plurality of different first images and an augmented reality optical system configured to transmit the plurality of first images formed by the plurality of image forming devices and a second image, which is an external image viewed by a user, to an ocular organ of the user, wherein the augmented reality optical system includes an optical waveguide having an incident surface on which the plurality of first images is incident, the optical waveguide being configured to provide movement paths for the plurality of first images and the second image, at least one reflective mirror disposed in the optical waveguide or on the surface of the optical waveguide, the reflective mirror being configured to reflect the plurality of first images into the optical waveguide, and at least one partial mirror disposed in the optical waveguide, the partial mirror having characteristics of transmitting the plurality of first images transmitted from the incident surface to the reflective mirror and the second image, which is different from the plurality of first images, the partial mirror being configured to reflect and transmit the plurality of first images, which is reflected by the reflective mirror and transmitted through the optical waveguide, to the ocular organ of the user, and when the plurality of first images is displayed to the user through the augmented reality optical system, the plurality of first images is formed at different distances from the ocular organ and realized as a three-dimensional stereoscopic image.

At least one of the reflective mirror and the partial mirror may be provided in plural.

The plurality of image forming devices may include a first image forming device and a second image forming device, the at least one reflective mirror may include a first reflective mirror and a second reflective mirror, the first reflective mirror may be configured to reflect a **1-1** image formed by the first image forming device into the optical waveguide, and the second reflective mirror may be configured to reflect a 1-2 image formed by the second image forming device into the optical waveguide.

The plurality of image forming devices may include a first image forming device and a second image forming device, the at least one partial mirror may include a first partial mirror and a second partial mirror, the first partial mirror may be configured to transmit a 1-1 image formed by the first image forming device to the ocular organ of the user, and the second partial mirror may be configured to transmit a 1-2 image formed by the second image forming device to the ocular organ of the user.

The partial mirror may be a dielectric coating layer.

The optical waveguide may include a first waveguide portion and a second waveguide portion, and the partial mirror may be disposed between the first and second waveguide portions.

The partial mirror may be configured not to change an optical path for light transmitted through the partial mirror and to change the optical path for light reflected by the partial mirror.

The partial mirror may have a transmittance of approximately 50 to 80%.

The partial mirror may be disposed between the plurality of image forming devices and the reflective mirror.

The partial mirror may be disposed between the incident surface and the reflective mirror.

The reflective mirror may be a metallic coating layer.

Each of the plurality of image forming devices may include an organic light emitting diode (OLED) panel or a light emitting diode (LED) panel.

The augmented reality optical system may have a field of view of approximately 20° or more.

The optical waveguide may be configured to reflect light corresponding to each of the plurality of first images a plurality of times through internal reflection.

The augmented reality optical system may further include at least one of at least one additional reflective mirror and at least one additional partial mirror.

The additional reflective mirror may be disposed in the optical waveguide or on the surface of the optical waveguide and may be configured to reflect light corresponding to an image formed by any one of the plurality of image forming devices into the optical waveguide.

The additional partial mirror may be disposed in the optical waveguide and may be configured to transmit light corresponding to an image formed by any one of the plurality of image forming devices and to reflect light corresponding to an image formed by another of the plurality of image forming devices.

The optical waveguide may have the form of eyeglass lenses.

The optical apparatus may be an eyeglass-type apparatus or a goggle-type apparatus.

### BRIEF DESCRIPTION OF THE DRAWINGS

FIGs. 1A and 1B are views schematically showing an optical apparatus for augmented reality (AR) capable of realizing three-dimensional stereoscopic images according to an embodiment of the present invention;
FIG. 2 is a view three-dimensionally showing the optical apparatus for augmented reality (AR) capable of realizing three-dimensional stereoscopic images according to the embodiment of FIGs. 1A and 1B;
FIG. 3 is a view illustratively showing a movement path of light corresponding to a plurality of first images through the optical apparatus for augmented reality (AR) capable of realizing three-dimensional stereoscopic images according to the embodiment of FIG. 2;
FIG. 4 is a view illustratively showing the position at which the plurality of first images is formed through the optical apparatus for augmented reality (AR) capable of realizing three-dimensional stereoscopic images according to the embodiment of FIG. 2;
FIG. 5 is a conceptual view schematically showing an optical apparatus for augmented reality (AR) capable of realizing three-dimensional stereoscopic images according to another embodiment of the present invention;
FIG. 6 is a view conceptually describing an image composition method applicable to an optical apparatus for augmented reality (AR) capable of realizing three-dimensional stereoscopic images according to an embodiment of the present invention;
FIG. 7 is a view conceptually describing an image composition method applicable to an optical apparatus for augmented reality (AR) capable of realizing three-dimensional stereoscopic images according to another embodiment of the present invention;
FIG. 8 is a view describing an optical apparatus for augmented reality (AR) capable of realizing three-dimensional stereoscopic images according to another embodiment of the present invention;
FIG. 9 is a view illustratively showing a composite image (virtual display image) displayed to a user through the optical apparatus for augmented reality (AR) capable of realizing three-dimensional stereoscopic images according to the embodiment of FIG. 8;
FIG. 10 is a conceptual view schematically showing an optical apparatus for augmented reality (AR) capable of realizing three-dimensional stereoscopic images according to another embodiment of the present invention;
FIG. 11 is a conceptual view schematically showing an optical apparatus for augmented reality (AR) capable of realizing three-dimensional stereoscopic images according to another embodiment of the present invention; and
FIG. 12 is a view illustratively describing an optical apparatus for augmented reality (AR) capable of realizing three-dimensional stereoscopic images according to another embodiment of the present invention.

### DETAILED DESCRIPTION OF THE PREFERRED EMBODIMENTS

Hereinafter, embodiments of the present invention will be described in detail with reference to the accompanying drawings.

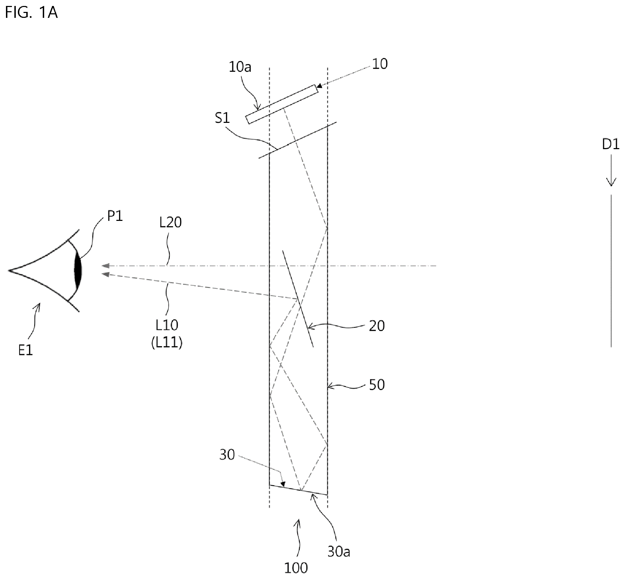

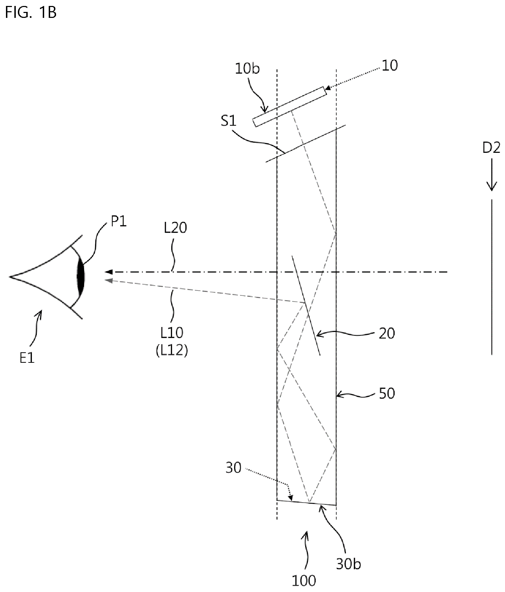

FIGs. 1A and 1B are views schematically showing an optical apparatus for augmented reality (AR) capable of realizing three-dimensional stereoscopic images according to an embodiment of the present invention. FIGs. 1A and 1B show the sectional structures of the optical apparatus at different positions (areas).

Referring to FIGs. 1A and 1B, the optical apparatus for augmented reality (AR) capable of realizing three-dimensional stereoscopic images according to the embodiment of the present invention may include a plurality of image forming devices 10 for forming a plurality of different first images and an augmented reality optical system 100 for transmitting the plurality of first images formed by the plurality of image forming devices 10 and a second image, which is an external image viewed by a user, to an ocular organ E1 of the user, i.e., the eye. Here, reference symbol P1 denotes the pupil of the ocular organ E1. The augmented reality optical system 100 may also be referred to as an optical see-through system.

Each of the plurality of image forming devices 10 may include, for example, an organic light emitting diode (OLED) display device or a light emitting diode (LED) display device. In other words, each of the plurality of image forming devices 10 may include an OLED panel or an LED panel. The LED panel may be a micro-LED panel or a nano-LED panel. Each of the plurality of image forming devices 10 may be referred to as a type of display device, micro-display device, or nano-display device. However, the specific configuration of each of the plurality of image forming devices 10 is not limited to what has been described above, and may be changed.

Here, the case in which the plurality of image forming devices 10 includes a first image forming device 10a and a second image forming device 10b is shown. The plurality of image forming devices 10 may form the plurality of first images, respectively. The first image forming device 10a may form a 1-1 image, and the second image forming device 10b may form a 1-2 image. The 1-1 image and the 1-2 image may correspond to the plurality of first images.

The light corresponding to the first image is denoted by reference symbol L10, and the light corresponding to the second image is denoted by reference symbol L20. In this specification, the first image may refer to the light L10 corresponding to the first image, and the second image may refer to the light L20 corresponding to the second image. The augmented reality optical system 100 may transmit/guide the first image by the light L10 of a first path and the second image by the light L20 of a second path to the ocular organ E1 of the user. Here, the light L20 of the second path may be light that has passed through the augmented reality optical system 100. The light L10 of the first path may move along a path different from the path of the light L20 of the second path.

The first image transmitted by the light L10 of the first path may be an image that is formed and provided in the optical apparatus for augmented reality (AR). That is, the first image may be an image that is formed and provided by the image forming device 10. The first image may be a "display image," which includes virtual reality or virtual information. The second image transmitted by the light L20 of the second path may be an external image that the user faces through the augmented reality optical system 100. The second image may include an image of the foreground that the user faces, and may include a predetermined background subject. The second image may be an image of the real world. Therefore, the optical apparatus according to the present embodiment may be applied to implement augmented reality (AR). The optical apparatus according to the present embodiment may be referred to as an augmented reality (AR) display device or a multi-image display device.

The light corresponding to the 1-1 image formed by the first image forming device 10a is denoted by reference symbol L11, and the light corresponding to the 1-2 image formed by the second image forming device 10b is denoted by reference symbol L12. Therefore, the light L10 corresponding to the plurality of first images may include the light L11 corresponding to the 1-1 image and the light L12 corresponding to the 1-2 image.

The augmented reality optical system 100 may include an optical waveguide 50, at least one reflective mirror 30, and at least one partial mirror 20.

The optical waveguide 50 may have an incident surface S1 on which the plurality of first images is incident, and may provide movement paths for the plurality of first images and the second image. The optical waveguide 50 may be referred to as a medium layer (medium portion) or a lens layer (lens portion).

The at least one reflective mirror 30 may be disposed in the optical waveguide 50 or on the surface of the optical waveguide 50. The reflective mirror 30 may be configured to reflect the plurality of first images into the optical waveguide 50. The reflective mirror 30 may have no or substantially no transmission characteristics.

The at least one partial mirror 20 may be disposed in the optical waveguide 50. The partial mirror 20 may have characteristics of transmitting the plurality of first images transmitted from the incident surface S1 to the reflective mirror 30 and the second image, which is different from the plurality of first images, and may be configured to reflect and transmit the plurality of first images reflected by the reflective mirror 30 and transmitted through the optical waveguide 50 to the ocular organ E1 of the user. The partial mirror 20 may possess both reflection characteristics and transmission characteristics. In this regard, the partial mirror 20 may be referred to as a "reflective and transmissive member." By using the partial mirror 20, it is possible to use the optical path passing through the partial mirror 20 even when the optical waveguide 50 is thin, thereby ensuring excellent see-through characteristics. In addition, by using the partial mirror 20, space savings and a reduction in the thickness of the optical system may be achieved.

At least one of the reflective mirror 30 and the partial mirror 20 may be provided in plural. When at least one of the reflective mirror 30 and the partial mirror 20 is provided in plural, the optical path may be divided for the plurality of first images. FIGs. 1A and 1B show the case in which the reflective mirror 30 is provided in plural. That is, FIGs. 1A and 1B show the case in which the augmented reality optical system 100 includes a first reflective mirror 30a and a second reflective mirror 30b. As such, the partial mirror 20 may be provided as one, and the reflective mirror 30 may be provided in plural. In another case, the partial mirror 20 may be provided in plural, and the reflective mirror 30 may be provided as one. Alternatively, each of the partial mirror 20 and the reflective mirror 30 may be provided in plural.

When the plurality of first images is displayed to the user through the augmented reality optical system 100, the plurality of first images may be formed at different distances from the ocular organ E1 and realized as a three-dimensional stereoscopic image. In other words, when the plurality of first images is displayed to the user through the augmented reality optical system 100, the plurality of first images may be located at different distances from the ocular organ E1 and stereoscopically displayed in three dimensions. In FIG. 1A, reference symbol D1 denotes the position (first position) at which the 1-1 image is formed when the 1-1 image is displayed to the user by the light L11 corresponding to the 1-1 image. In FIG. 1B, reference symbol D2 denotes the position (second position) at which the 1-2 image is formed when the 1-2 image is displayed to the user by the light L12 corresponding to the 1-2 image. The first and second positions D1 and D2 may be located at different distances from the ocular organ E1. Therefore, the 1-1 and 1-2 images may be displayed to the user as a three-dimensional stereoscopic image.

As in the embodiment shown in FIGs. 1A and 1B, the plurality of image forming devices 10 may include first and second image forming devices 10a and 10b, and the at least one reflective mirror 30 may include first and second reflective mirrors 30a and 30b. In this case, the first reflective mirror 30a may be configured to reflect the 1-1 image formed by the first image forming device 10a into the optical waveguide 50, and the second reflective mirror 30b may be configured to reflect the 1-2 image formed by the second image forming device 10b into the optical waveguide 50. The first and second reflective mirrors 30a and 30b may be spaced apart from each other, for example, in a horizontal direction. However, in some cases, the plurality of reflective mirrors may be spaced apart from each other in a vertical direction.

In another embodiment, the plurality of image forming devices 10 may include first and second image forming devices 10a and 10b, and the at least one partial mirror 20 may include a first partial mirror and a second partial mirror. In this case, the first partial mirror may be configured to transmit the 1-1 image formed by the first image forming device 10a to the ocular organ E1 of the user, and the second partial mirror may be configured to transmit the 1-2 image formed by the second image forming device 10b to the ocular organ E1 of the user. The first and second partial mirrors may be spaced apart from each other in the vertical direction or in the horizontal direction. When a plurality of partial mirrors is provided, the plurality of partial mirrors may be spaced apart from each other in at least one of the vertical and horizontal directions.

In accordance with an embodiment, the partial mirror 20 may be a dielectric coating layer. The partial mirror 20 may be made of a material different from the material of the optical waveguide 50, and may be made of a dielectric material. When light is transmitted through (passes through) the partial mirror 20, the medium on the front side and the medium on the back side of the partial mirror 20 (i.e., the medium before light incidence and the medium after light transmission) may be the same. In this regard, when light is transmitted through the partial mirror 20, there may be no change (effect) or substantially no change (effect) in the optical path. The partial mirror 20 may be configured such that the refractive indices thereof in the optical paths before and after the partial mirror are the same.

The partial mirror 20 may be provided in the optical waveguide 50. The optical waveguide 50 may include a first waveguide portion and a second waveguide portion, and the partial mirror 20 may be disposed between the first and second waveguide portions. When manufacturing the optical waveguide 50, the first waveguide portion and the second waveguide portion may be manufactured separately, the partial mirror 20 may be formed on the surface of one of the first and second waveguide portions by dielectric coating, and the first and second waveguide portions are joined to each other to integrate the first and second waveguide portions, whereby the optical waveguide 50 having the partial mirror 20 provided therein may be manufactured. At this time, in the remaining area excluding the area in which the partial mirror 20 is provided, the boundary between the first and second waveguide portions that is distinguishable to the naked eye may not be substantially formed.

Each of both surfaces of the partial mirror 20 may be an aspherical surface. Each of both surfaces of the partial mirror 20 may be an aspherical surface in which the curvature in an X-axis direction is different from (does not coincide with) the curvature in a Y-axis direction. Each of both surfaces of the partial mirror 20 may be an aspherical surface in which the radius of curvature in the X-axis direction is different from (does not coincide with) the radius of curvature in the Y-axis direction. Here, the X-axis direction may be a horizontal direction in which the partial mirror 20 extends, and the Y-axis direction may be a direction perpendicular to the X-axis direction. The X-axis direction and the Y-axis direction may be determined based on a front view of the partial mirror 20. The partial mirror 20 may have an X/Y asymmetric aspherical surface. In accordance with an embodiment, by applying an asymmetric aspherical coating layer in which the radii of curvature in the X-axis and Y-axis directions do not coincide with each other (i.e., X radius of curvature ≠ Y radius of curvature) to the partial mirror 20, it is possible to adjust the value of diopter in a reflection path and to easily correct the aberration of an image entering the pupil P1.

In accordance with an embodiment, the partial mirror 20 may be configured to change the optical path only for the light reflected by the partial mirror without changing or substantially changing the optical path for the light that is transmitted through the partial mirror. When the light L10 corresponding to the first image transmitted from the incident surface S1 to the reflective mirror 30 is transmitted through the partial mirror 20, the optical path thereof may not be changed or may not be substantially changed by the partial mirror 20. Furthermore, when the light L20 corresponding to the second image, which is an external image, is transmitted through the partial mirror 20, the optical path thereof may not be changed or may not be substantially changed by the partial mirror 20. However, when the light L10 corresponding to the first image, which is reflected by the reflective mirror 30 and transmitted through the optical waveguide 50, is reflected by the partial mirror 20 and transmitted to the ocular organ E1, the partial mirror 20 may change the path of the light L10 through reflection. To satisfy these characteristics, the shape, structure, and disposition of the partial mirror 20 may be determined. The partial mirror 20 may be disposed so as to be closer (nearer) to a vertical plane than to a horizontal plane.

If the partial mirror 20 is configured not to change or substantially change the optical path for the light transmitted through the partial mirror and to change the optical path only for the light reflected by the partial mirror, the optical apparatus according to the embodiment may exhibit superior augmented reality (AR) display characteristics.

In accordance with an embodiment, the partial mirror 20 may have a transmittance of approximately 50% or more. For example, the partial mirror 20 may have a transmittance of approximately 50 to 80% or approximately 70 to 80%. By securing a high transmittance of approximately 50 to 80% or approximately 70 to 80%, good see-through characteristics may be ensured even when an AR mode is not active.

The partial mirror 20 may be provided as one or in plural. The partial mirror 20 may have characteristics that make it difficult for the user's eye, i.e., the ocular organ E1, to see the partial mirror. Particularly, if the partial mirror 20 is divided into a plurality of units and each unit is relatively small in size, the partial mirror may be barely visible to the user. This principle is similar to why baseball field backstop netting is barely visible when a camera installed behind the netting films action on the field. That is, the partial mirror may be designed such that the focal position of the image formed through the augmented reality optical system 100 is set to approximately 1 m or more or approximately 1.5 m or more using the principle by which the net does not appear in the image due to the difference in focal positions between an object (player) far from a lens and an object (netting) immediately in front of the lens, whereby the plurality of divided partial mirrors is not visible to the user wearing the optical apparatus. When using the plurality of partial mirrors, visual transparency resulting from the difference in focal positions may be used to ensure that the boundary between the partial mirrors dividing the image is invisible to the user, thereby achieving a smooth full screen without any distractions.

The partial mirror 20 may be disposed between the plurality of image forming devices 10 and the reflective mirror 30. In addition, the partial mirror 20 may be disposed between the incident surface S1 of the optical waveguide 50 and the reflective mirror 30. The partial mirror 20 may be disposed at a central portion of the optical waveguide 50 or at an area adjacent thereto. The incident surface S1 and the reflective mirror 30 may be disposed on opposite sides in the state in which the partial mirror 20 is interposed therebetween.

In an example, the reflective mirror 30 may be a metallic coating layer. The reflective mirror 30 may be made of a metallic material (metal material) having excellent reflective properties. As a non-limiting example, the reflective mirror 30 may be made of silver (Ag) or may include silver (Ag). The reflective mirror 30 may be provided on the surface of the optical waveguide 50, but in some cases, the reflective mirror may be provided in the optical waveguide 50. When the reflective mirror 30 is provided on the surface of the optical waveguide 50, the reflective mirror 30 may be provided on an outer surface, such as a lower surface or a side surface, of the optical waveguide 50. In accordance with an embodiment, the reflective mirror 30 may be disposed so as to be closer (nearer) to the horizontal plane than to the horizontal plane.

In an example, the plurality of image forming devices 10 may be disposed above or beside the optical waveguide 50. FIGs. 1A and 1B show the case in which the plurality of image forming devices 10 is disposed above the optical waveguide 50. The plurality of image forming devices 10 may be disposed above an upper surface of the optical waveguide 50 so as to be adjacent to the optical waveguide 50 or to be spaced apart from the optical waveguide 50. In this case, the incident surface S1 may be defined on the upper surface of the optical waveguide 50. The incident surface S1 may be a horizontal plane, a plane close to the horizontal plane, or a plane inclined with respect to the horizontal plane. However, in some cases, the position of the plurality of image forming devices 10 and the positional relationship between the plurality of image forming devices 10 and the optical waveguide 50 may be changed.

The optical waveguide 50 may be configured to reflect the light L10 corresponding to the first image one or more times through internal reflection. For example, the optical waveguide 50 may be configured to reflect the light L10 corresponding to the first image a plurality of times through internal reflection. The internal reflection may be a total reflection or a reflection close to total reflection occurring at a boundary surface of the optical waveguide 50. The internal reflection may occur at each of the front side and the rear side of the optical waveguide 50.

In an example, the augmented reality optical system 100 may have an F-number of approximately 6 to 12. The aperture ratio may be optimized to achieve an F-number of approximately 6 to 12. An F-number of approximately 6 or more may deepen the depth of field of an image, thereby improving image quality. An F-number of approximately 12 or less may serve as an upper limit to prevent a decrease in optical efficiency. The distance from the plurality of image forming devices 10 to the reflective mirror 30 may be a key factor in determining the F-number. The reflective mirror 30 may be a total internal reflection mirror and, may be, for example, a metal coating layer.

In accordance with the embodiment, the images (i.e., the plurality of first images) formed by the plurality of image forming devices 10 may be transmitted through the high-transmittance partial mirror 20, whereby it is possible to implement an optical system that is thin yet has a sufficient F-number. In this case, the F-number may be approximately 6 to 12. This F-number range allows for increased depth of field of an image, improved image quality, and enhanced light efficiency.

In addition, the augmented reality optical system 100 may have a field of view (angle of view) of approximately 20° or more or approximately 30° or more for a virtual display image. The augmented reality optical system 100 may have a field of view (angle of view) of approximately 40° or more. In other words, the optical apparatus for augmented reality (AR) according to the embodiment may have a field of view (angle of view) of approximately 20° or more, approximately 30° or more, or approximately 40° or more. The optical apparatus for augmented reality (AR) may have a field of view (angle of view) of approximately 40° or more or approximately 60° or more. The field of view (angle of view) may be approximately 100° or more.

Additionally, in a specific example, the augmented reality optical system 100 may be configured such that the light L10 corresponding to the first image, which has entered the optical waveguide 50 through the incident surface S1, is reflected from a first surface portion of the optical waveguide 50, is transmitted through the partial mirror 20, is reflected from a second surface portion of the optical waveguide 50, is reflected from the reflective mirror 30, is reflected from a third surface portion of the optical waveguide 50, is reflected from a fourth surface portion of the optical waveguide 50, is reflected from the partial mirror 20, and is transmitted to the ocular organ E1 of the user.

Each of the first to fourth surface portions of the optical waveguide 50 may be a boundary surface portion of the optical waveguide 50. The first and third surface portions of the optical waveguide 50 may be a front surface portion of the optical waveguide 50, and the second and fourth surface portions of the optical waveguide 50 may be a rear surface portion of the optical waveguide 50. The second surface portion and the fourth surface portion of the optical waveguide 50 may at least partially overlap each other. Reflection by the optical waveguide 50 may be internal reflection, total internal reflection, or reflection close to total internal reflection.

However, the movement path of the light L10 corresponding to the first image described with reference to FIGs. 1A and 1B is illustrative and may be changed depending on the circumstances. For example, the number and position of internal reflections (total internal reflections) occurring in the optical waveguide 50 may be changed. In a specific example, at least one of reflection from the second surface portion of the optical waveguide 50, reflection from the third surface portion of the optical waveguide 50, and reflection from the fourth surface portion of the optical waveguide 50 may be omitted. In addition, various other changes are possible.

In accordance with the embodiment of the present invention, the plurality of first images may be divided and provided to the user. When the plurality of first images is displayed to the user, at least two of the plurality of first images may partially overlap or may not overlap each other. The optical apparatus according to the embodiment may include a plurality of image forming devices (i.e., display panels), and at least one of the partial mirror and the reflective mirror applied to the augmented reality optical system may be provided in plural.

The optical apparatus for augmented reality (AR) according to the embodiment of the present invention may be referred to as a "differential image waveguide optical apparatus for augmented reality." The optical apparatus for augmented reality (AR) according to the embodiment may basically be an apparatus using geometric optics, or may be an apparatus using differential image waveguide optics. The technology according to the embodiment is based on geometric optics, and in particular, is capable of resolving the trade-off between "thickness" and "field of view," which is a chronic problem with AR apparatuses (glasses), through a unique method known as "image segmentation and composition."

In addition, the optical apparatus for augmented reality (AR) according to the embodiment of the present invention may be referred to as a "differential image waveguide holographic optical apparatus employing a multi-panel (image forming device)" in that a three-dimensional stereoscopic image is realized using the multi-panel. The three-dimensional stereoscopic image may be referred to as a "holographic image."

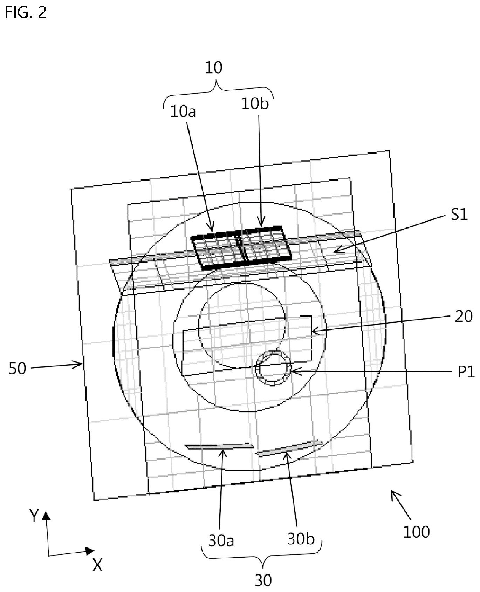

FIG. 2 is a view three-dimensionally showing the optical apparatus for augmented reality (AR) capable of realizing three-dimensional stereoscopic images according to the embodiment of FIGs. 1A and 1B.

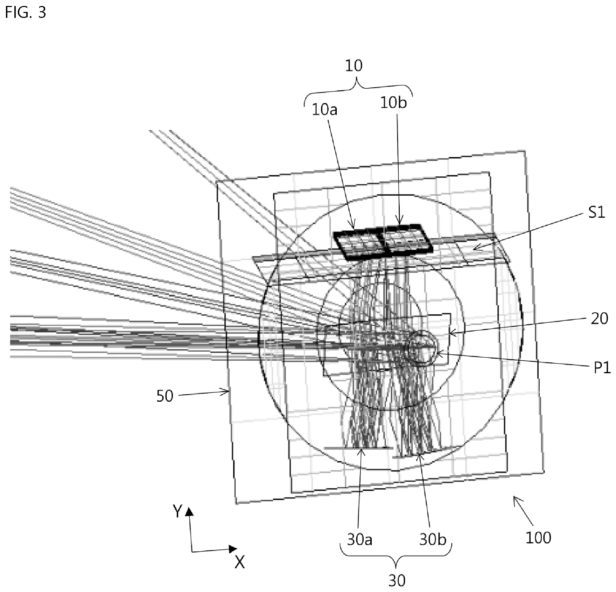

FIG. 3 is a view illustratively showing the movement path of the light corresponding to the plurality of first images through the optical apparatus for augmented reality (AR) capable of realizing three-dimensional stereoscopic images according to the embodiment of FIG. 2.

Referring to FIGs. 2 and 3, the optical apparatus for augmented reality (AR) capable of realizing three-dimensional stereoscopic images according to the embodiment may have the same configuration as described with reference to FIGs. 1A and 1B. The optical apparatus for augmented reality (AR) may include a plurality of image forming devices 10 for forming a plurality of different first images and an augmented reality optical system 100 for transmitting the plurality of first images formed by the plurality of image forming devices 10 and a second image, which is an external image viewed by a user, to an ocular organ E1 of the user.

The augmented reality optical system 100 may include an optical waveguide 50, at least one reflective mirror 30, and at least one partial mirror 20. The optical waveguide 50 may have an incident surface S1 on which the plurality of first images is incident, and may provide movement paths for the plurality of first images and the second image. The reflective mirror 30 may be disposed in the optical waveguide 50 or on the surface of the optical waveguide 50, and may be configured to reflect the plurality of first images into the optical waveguide 50. The partial mirror 20 may be disposed in the optical waveguide 50. The partial mirror 20 may have characteristics of transmitting the plurality of first images transmitted from the incident surface S1 to the reflective mirror 30 and the second image, which is different from the plurality of first images, and may be configured to reflect and transmit the plurality of first images, which is reflected by the reflective mirror 30 and transmitted through the optical waveguide 50, to the ocular organ **E1** of the user.

At least one of the reflective mirror 30 and the partial mirror 20 may be provided in plural. When at least one of the reflective mirror 30 and the partial mirror 20 is provided in plural, the optical path may be divided for the plurality of first images. Here, the case in which the reflective mirror 30 is provided in plural is shown. In this case, the augmented reality optical system 100 includes a first reflective mirror 30a and a second reflective mirror 30b. The partial mirror 20 may be provided as one, and the reflective mirror 30 may be provided in plural. In another case, the partial mirror 20 may be provided in plural, and the reflective mirror 30 may be provided as one. Alternatively, each of the partial mirror 20 and the reflective mirror 30 may be provided in plural.

The first and second image forming devices 10a and 10b may be disposed in contact with each other or spaced apart from each other. The first and second image forming devices 10a and 10b may be disposed in contact with each other or spaced apart from each other in a direction parallel to the incident surface S1. The first and second reflective mirrors 30a and 30b may be disposed spaced apart from each other in the direction parallel to the incident surface S1. A reflective surface of each of the first and second reflective mirrors 30a and 30b may be at least partially curved. In an example, the reflective surface of each of the first and second reflective mirrors 30a and 30b may be slightly concave relative to the center of the optical waveguide 50. The partial mirror 20 may be disposed between the plurality of image forming devices 10 and the reflective mirror 30. Each of both surfaces of the partial mirror 20 may be an X/Y asymmetric aspherical surface in which the curvature (radius of curvature) in the X-axis direction is different from the curvature (radius of curvature) in the Y-axis direction. However, the specific structure of the optical apparatus shown in FIGs. 2 and 3 and the disposition of components constituting the optical apparatus are illustrative and may be changed depending on the circumstances.

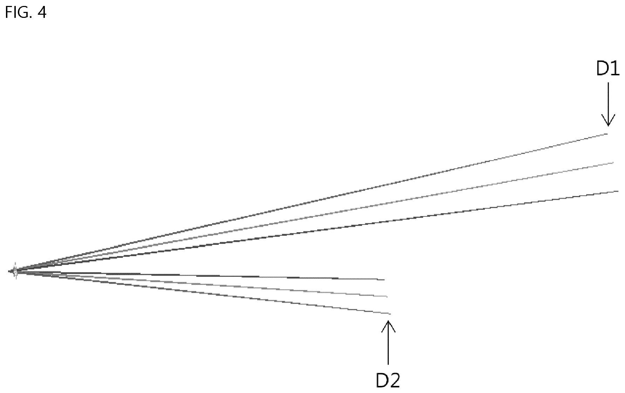

FIG. 4 is a view illustratively showing the position at which the plurality of first images is formed through the optical apparatus for augmented reality (AR) capable of realizing three-dimensional stereoscopic images according to the embodiment of FIG. 2.

Referring to FIG. 4, when the plurality of first images is displayed to the user through the optical apparatus for augmented reality (AR), the plurality of first images may be formed at different distances from the ocular organ (eye) of the user and realized as a three-dimensional stereoscopic image. In other words, when the plurality of first images is displayed to the user through the augmented reality optical system, the plurality of first images may be located at different distances from the ocular organ and stereoscopically displayed in three dimensions.

In FIG. 4, reference symbol D1 denotes the position (first position) at which a 1-1 image formed by the first image forming device (display panel) is formed when the 1-1 image is displayed to the user by the light corresponding to the 1-1 image. Reference symbol D2 denotes the position (second position) at which a 1-2 image formed by the second image forming device (display panel) is formed when the 1-2 image is displayed to the user by the light corresponding to the 1-2 image. The difference in image formation positions may be due to differences in the optical path and diopter for the 1-1 image and the 1-2 image. The first and second positions D1 and D2 may be located at different distances from the ocular organ of the user. Therefore, the 1-1 and 1-2 images may be displayed to the user as a three-dimensional stereoscopic image.

In an example, in the differential image waveguide optics, when separate images are provided by two image forming devices (panels) while the field positions handled by the two image forming devices (panels) are made identical and the distance at which the image is formed (the distance from the pupil to the point where the image is formed) is changed, a more stereoscopic image may be realized. The images formed by the two image forming devices (panels) may enter the pupil via different optical paths, and at this time, the positions at which the two image forming devices (panels) are located may not be the same.

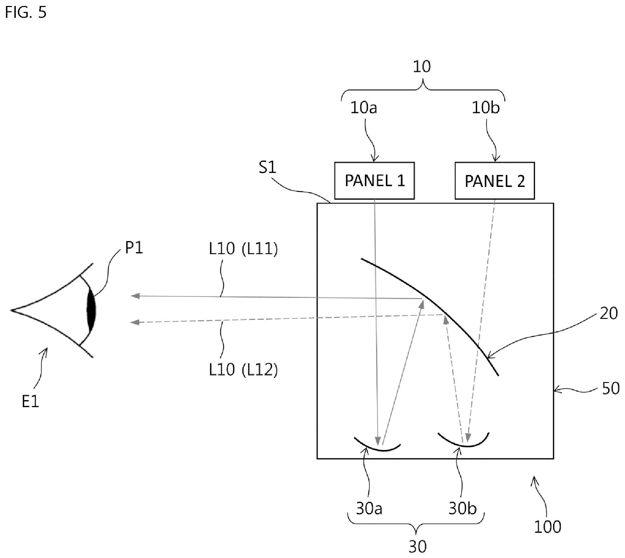

FIG. 5 is a conceptual view schematically showing an optical apparatus for augmented reality (AR) capable of realizing three-dimensional stereoscopic images according to another embodiment of the present invention.

Referring to FIG. 5, the optical apparatus for augmented reality (AR) according to the present embodiment may have a configuration identical or similar to the configuration of the optical apparatus for augmented reality (AR) described above with reference to FIGs. 1A, 1B, 2, and 3. For convenience, in FIG. 5, the disposition of some components is arbitrarily changed to facilitate understanding, and a path of light L10 corresponding to a plurality of first images is simplified for illustration. In practice, light L11 corresponding to a 1-1 image and light L12 corresponding to a 1-2 image may proceed in an optical waveguide 50 while being reflected by the optical waveguide 50. The components and optical path of the optical apparatus shown in FIG. 5 may be easily understood from the description given with reference to FIGs. 1A to 3.

Embodiments of the present invention may provide a technology/method for realizing a three-dimensional stereoscopic image (e.g., holographic image) through the augmented reality (AR) optical system. In accordance with an embodiment of the present invention, it is possible to realize a three-dimensional stereoscopic image (e.g., holographic image) and to reduce the overall size of the optical apparatus using an augmented reality optical system having a small thickness (approximately 10 mm or less or approximately 7 mm or less). Furthermore, in accordance with an embodiment of the present invention, it is possible to realize a large-screen three-dimensional stereoscopic image (e.g., holographic image) of approximately 20 inches or more or approximately 40 inches or more and to increase the field of view (FOV) for a virtual display image to approximately 20° or more, approximately 30° or more, or approximately 40° or more.

In accordance with an embodiment of the present invention, in the differential image waveguide optics, when separate images are provided by a plurality of image forming devices (panels) while the field positions handled by the plurality of image forming devices (panels) are made identical and the distance at which the image is formed (i.e., diopter) is changed, a more stereoscopic image may be realized. For example, when an image including a car and a person is formed at a distance of 2 m from the pupil using the first image forming device (panel) and an image of a background building or tree is formed at a distance of 5 m from the pupil using the second image forming device (panel), a more stereoscopic image may be realized. Furthermore, when three or more panels are adopted, a more stereoscopic virtual reality image may be realized.

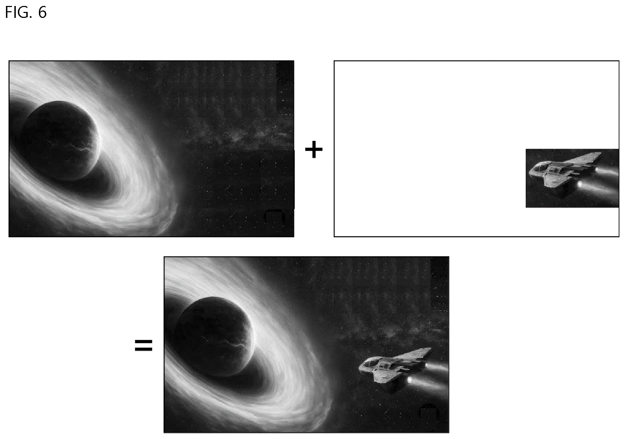

FIG. 6 is a view conceptually describing an image composition method applicable to an optical apparatus for augmented reality (AR) capable of realizing three-dimensional stereoscopic images according to an embodiment of the present invention.

Referring to FIG. 6, an image of a planet may be formed by the first image forming device (display panel), and an image of a spacecraft may be formed by the second image forming device (display panel). In this case, an image (composite image) reaching the retina of the ocular organ of the user may be an image of the spacecraft approaching the planet.

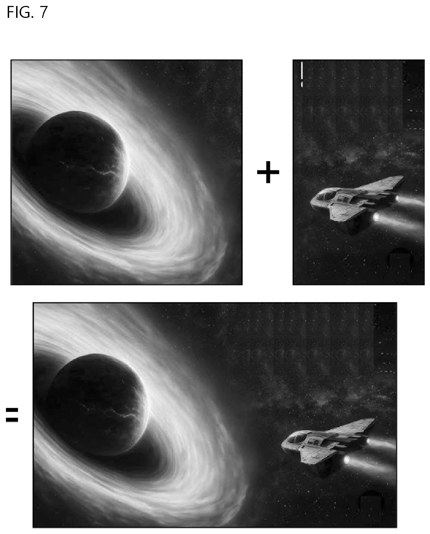

FIG. 7 is a view conceptually describing an image composition method applicable to an optical apparatus for augmented reality (AR) capable of realizing three-dimensional stereoscopic images according to another embodiment of the present invention.

Referring to FIG. 7, a left image of the entire image (virtual image) may be formed by the first image forming device (display panel), and a right image of the entire image (virtual image) may be formed by the second image forming device (display panel). An image (composite image) reaching the retina of the ocular organ of the user may be an image of a spacecraft approaching a planet. When the field positions (angles of incidence) handled by the plurality of image forming devices are made to be different from each other, the field of view may be increased.

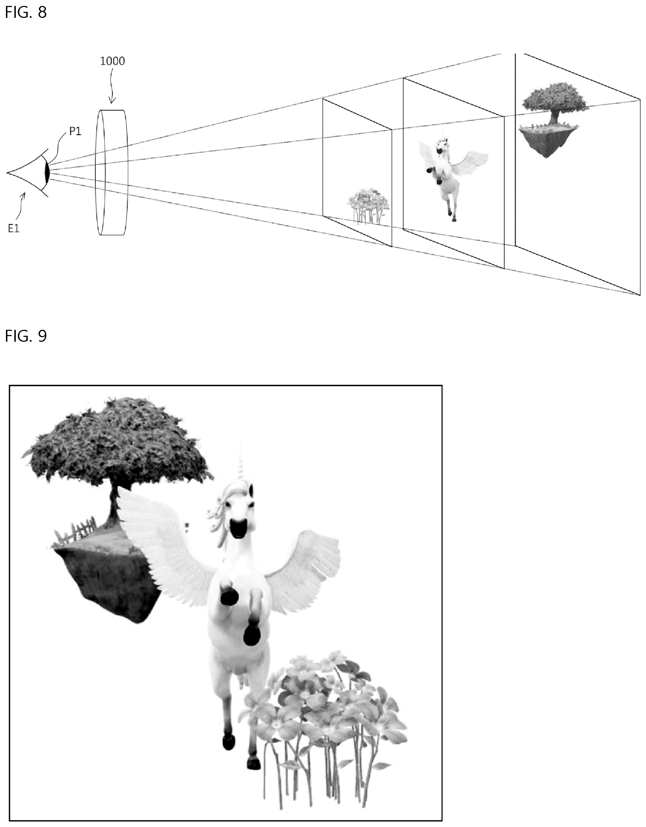

FIG. 8 is a view describing an optical apparatus for augmented reality (AR) capable of realizing three-dimensional stereoscopic images according to another embodiment of the present invention.

FIG. 9 is a view illustratively showing a composite image (virtual display image) displayed to a user through the optical apparatus for augmented reality (AR) capable of realizing three-dimensional stereoscopic images according to the embodiment of FIG. 8.

Referring to FIGs. 8 and 9, the optical apparatus 1000 for augmented reality (AR) capable of realizing three-dimensional stereoscopic images according to the present embodiment may include three image forming devices (panels). The three image forming devices (panels) may form a plurality of different first images. When the plurality of first images is displayed to the user through the optical apparatus 1000 for augmented reality (AR), the plurality of first images may be formed at different distances from the ocular organ E1 of the user and realized as a three-dimensional stereoscopic image. When three or more image forming devices (panels) are adopted, a more stereoscopic virtual reality image may be realized.

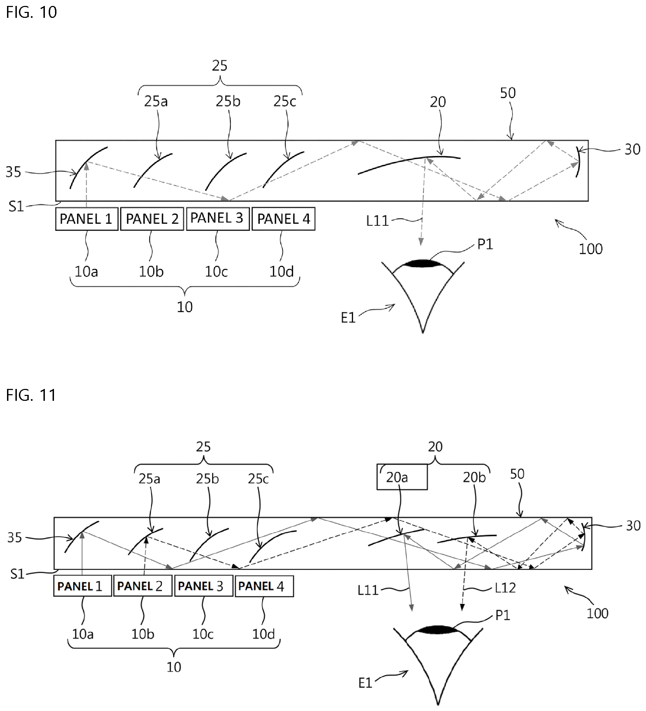

In accordance with another embodiment of the present invention, the augmented reality optical system applied to the optical apparatus for augmented reality (AR) capable of realizing three-dimensional stereoscopic images may further include at least one of at least one additional reflective mirror and at least one additional partial mirror. The additional reflective mirror may be disposed in the optical waveguide or on the surface of the optical waveguide, and may be configured to reflect light corresponding to an image formed by any one of the plurality of image forming devices into the optical waveguide. The additional partial mirror may be disposed in the optical waveguide, and may be configured to transmit light corresponding to an image formed by any one of the plurality of image forming devices and to reflect light corresponding to an image formed by another of the plurality of image forming devices. The case in which the augmented reality optical system further includes the additional reflective mirror and the additional partial mirror is illustratively shown in FIGs. 10 and 11.

FIG. 10 is a conceptual view schematically showing an optical apparatus for augmented reality (AR) capable of realizing three-dimensional stereoscopic images according to another embodiment of the present invention. In FIG. 10, the disposition of components and an optical path are shown schematically for the convenience of conceptual explanation, and the disposition of components and an optical path in an actual apparatus may differ from those shown.

Referring to FIG. 10, the optical apparatus for augmented reality (AR) according to the present embodiment may include a plurality of image forming devices 10 for forming a plurality of different first images and an augmented reality optical system 100 for transmitting the plurality of first images formed by the plurality of image forming devices 10 and a second image, which is an external image viewed by a user, to an ocular organ E1 of the user. The augmented reality optical system 100 may include an optical waveguide 50, at least one reflective mirror 30, and at least one partial mirror 20. The optical waveguide 50 may have an incident surface S1 on which the plurality of first images is incident, and may provide movement paths for the plurality of first images and the second image.

The plurality of image forming devices 10 may include first to fourth image forming devices 10a, 10b, 10c, and 10d. The augmented reality optical system 100 may further include at least one additional reflective mirror 35 and at least one additional partial mirror 25.

The additional reflective mirror 35 may be disposed in the optical waveguide 50 or on the surface of the optical waveguide 50, and may be configured to reflect light corresponding to an image formed by any one of the plurality of image forming devices 10 into the optical waveguide 50. The additional reflective mirror 35 may be disposed so as to correspond to the first image forming device 10a.

The additional partial mirror 25 may be disposed in the optical waveguide 50, and may be configured to transmit light corresponding to an image formed by any one of the plurality of image forming devices 10 and to reflect light corresponding to an image formed by another of the plurality of image forming devices 10. The at least one additional partial mirror 25 may include, for example, first to third additional partial mirrors 25a, 25b, and 25c. The first to third additional partial mirrors 25a, 25b, and 25c may be disposed so as to correspond to the second to fourth image forming devices 10b, 10c, and 10d, respectively.

FIG. 10 schematically shows a movement path of light L11 corresponding to a 1-1 image formed by the first image forming device 10a. The light L11 corresponding to the 1-1 image may be reflected by the additional reflective mirror 35, reflected in the optical waveguide 50, transmitted through the partial mirror 20, reflected by the reflective mirror 30, reflected by the partial mirror 20, and transmitted to the ocular organ E1. During this process, the light L11 corresponding to the 1-1 image may move while being reflected a plurality of times through internal reflection in the optical waveguide 50. Meanwhile, in FIG. 10, the reflective mirror 30 may be provided in plural.

FIG. 11 is a conceptual view schematically showing an optical apparatus for augmented reality (AR) capable of realizing three-dimensional stereoscopic images according to another embodiment of the present invention. In FIG. 11, the disposition of components and an optical path are shown schematically for the convenience of conceptual explanation, and the disposition of components and an optical path in an actual apparatus may differ from those shown.

Referring to FIG. 11, the optical apparatus for augmented reality (AR) according to the present embodiment have a configuration similar to the configuration of the embodiment of FIG. 10, but a plurality of partial mirrors 20 is provided. The partial mirrors 20 may include at least first and second partial mirrors 20a and 20b.

FIG. 11 schematically shows movement paths of light L11 corresponding to a 1-1 image formed by a first image forming device 10a and light L12 corresponding to a 1-2 image formed by a second image forming device 10b. Movement paths of light corresponding to a 1-3 image formed by a third image forming device 10c and a 1-4 image formed by a fourth image forming device 10d are omitted.

The light L11 corresponding to the 1-1 image may be reflected by an additional reflective mirror 35, reflected in an optical waveguide 50, transmitted through the partial mirror 20, reflected by a reflective mirror 30, reflected by the first partial mirror 20a, and be transmitted to the ocular organ E1. During this process, the light L11 corresponding to the 1-1 image may move while being reflected a plurality of times through internal reflection in the optical waveguide 50. The light L12 corresponding to the 1-2 image may be reflected by a first additional partial mirror 25a, reflected in the optical waveguide 50, transmitted through the partial mirror 20, reflected by the reflective mirror 30, reflected by the second partial mirror 20b, and transmitted to the ocular organ E1. During this process, the light L12 corresponding to the 1-2 image may move while being reflected a plurality of times through internal reflection in the optical waveguide 50.

In the embodiments of FIGs. 10 and 11, differential image waveguide optics for realizing three-dimensional images, designed with four image forming devices (panels), are provided. Here, the partial mirrors 20 (20a and 20b) and the additional partial mirrors 25 (25a, 25b, and 25c) may have different transmittance values and different curvature values. Furthermore, as light proceeds from the second additional partial mirror 25b to the third additional partial mirror 25c, the transmittance may gradually increase from the second additional partial mirror 25b to the third additional partial mirror 25c. The additional reflective mirror 35 and the first to third additional partial mirrors 25a, 25b, and 25c may function to adjust the diopter of the images formed by the first to fourth image forming devices 10a, 10b, 10c, and 10d, and may have different curvature values. The partial mirrors 20 (20a and 20b) may play a key role in determining the size and area of the field transmitted to the pupil P1. The reflective mirror 30 may play a key role in adjusting the appropriate F-number and brightness for an image emitted from each of the image forming devices 10a, 10b, 10c, and 10d.

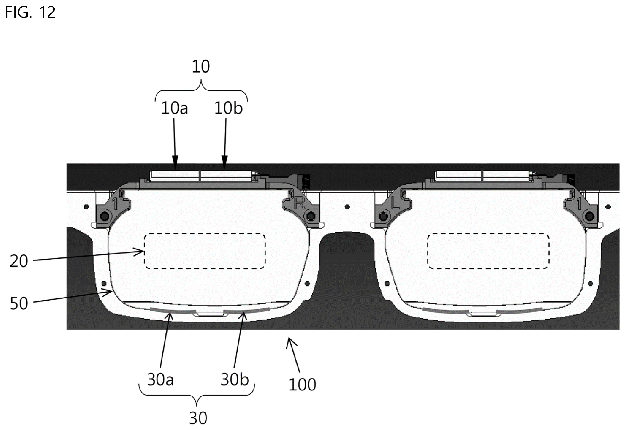

FIG. 12 is a view illustratively describing an optical apparatus for augmented reality (AR) capable of realizing three-dimensional stereoscopic images according to another embodiment of the present invention.

Referring to FIG. 12, in the optical apparatus for augmented reality (AR) capable of realizing three-dimensional stereoscopic images according to the present embodiment, an optical waveguide 50 may have the form of eyeglass lenses. The optical waveguide 50 may be made of a transparent or highly transparent material. The optical waveguide 50 may include a plastic or glass material. The optical apparatus may be an eyeglass-type apparatus or a goggle-type apparatus. Each of a pair of left and right eyeglass lens units may constitute the optical apparatus. A plurality of image forming devices 10, an optical waveguide 50, a reflective mirror 30, and a partial mirror 20 may be provided in each of the eyeglass lens units. The optical waveguide 50, the reflective mirror 30, and the partial mirror 20 may constitute an augmented reality optical system 100. At least one of the reflective mirror 30 and the partial mirror 20 may be provided in plural.

However, the specific configuration of optical apparatus for augmented reality (AR) shown in FIG. 12 is merely illustrative and may be variously changed depending on the circumstances. For example, at least one of the plurality of image forming devices 10 may be disposed beside the optical waveguide 50 rather than above the optical waveguide 50, and accordingly, the disposition of the reflective mirror 30 may also be changed.

In accordance with the embodiments of the present invention described above, it is possible to provide an optical apparatus for augmented reality (AR) capable of realizing three-dimensional stereoscopic images with superior performance, thereby remedying and overcoming the shortcomings and problems of conventional methods. Furthermore, in accordance with the embodiments of the present invention, it is possible to provide an optical apparatus for augmented reality (AR) capable of realizing three-dimensional stereoscopic images configured to reduce the thickness of a lens, to secure excellent see-through characteristics, to resolve chromatic aberration issues (i.e., color reproduction issues), and to secure a wide field of view (angle of view). Furthermore, in accordance with the embodiments of the present invention, it is possible to implement an electronic device/system to which the optical apparatus for augmented reality (AR) capable of realizing three-dimensional stereoscopic images is applied.

In accordance with an embodiment, it is possible to easily realize a three-dimensional stereoscopic image by adopting an augmented reality optical system configured such that at least one of a reflective mirror and a partial mirror is provided in plural in order to divide an optical path while using a plurality of image forming devices (display panels) for forming a plurality of different first images (virtual images, i.e., virtual reality). An optical apparatus for augmented reality (AR) capable of realizing three-dimensional stereoscopic images according to an embodiment may provide the sense of depth and stereoscopic effect similar to the real world, thereby enhancing immersion, and may more intuitively present complex information or structures.

In accordance with an embodiment, it is possible to more easily achieve color image implementation than in a conventional diffractive waveguide method by using given geometric optics. In accordance with an embodiment, it is possible to achieve a relatively high transmittance of approximately 50% or more or approximately 70 to 80% and to secure excellent see-through characteristics even when an AR mode is inactive. In accordance with an embodiment, it is possible to design an optical system with a smaller thickness than when using conventional birdbath or PinTILT optics. In accordance with an embodiment, it is possible to easily secure a sufficiently wide field of view.

As is apparent from the above description, in accordance with embodiments of the present invention, it is possible to provide an optical apparatus for augmented reality (AR) capable of realizing three-dimensional stereoscopic images with superior performance, thereby remedying and overcoming the shortcomings and problems of conventional methods. Furthermore, in accordance with the embodiments of the present invention, it is possible to provide an optical apparatus for augmented reality (AR) capable of realizing three-dimensional stereoscopic images configured to reduce the thickness of a lens, to secure excellent see-through characteristics, to resolve chromatic aberration issues (i.e., color reproduction issues), and to secure a wide field of view (angle of view). Furthermore, in accordance with the embodiments of the present invention, it is possible to implement an electronic device/system to which the optical apparatus for augmented reality (AR) capable of realizing three-dimensional stereoscopic images is applied.

In accordance with an embodiment, it is possible to easily realize a three-dimensional stereoscopic image by adopting an augmented reality optical system configured such that at least one of a reflective mirror and a partial mirror is provided in plural in order to divide an optical path while using a plurality of image forming devices (display panels) for forming a plurality of different first images (virtual images, i.e., virtual reality). An optical apparatus for augmented reality (AR) capable of realizing three-dimensional stereoscopic images according to an embodiment may provide the sense of depth and stereoscopic effect similar to the real world, thereby enhancing immersion, and may more intuitively present complex information or structures.

However, the effects of the present invention are not limited to the above effects, and may be variously expanded without departing from the technical ideas and scope of the present invention.

Preferred embodiments of the present invention have been disclosed herein, and although certain terms are used, they are used in a general sense to facilitate the description and understanding of the invention, and are not intended to limit the scope of the invention. In addition to the embodiments disclosed herein, other modifications based on the technical ideas of the present invention will be apparent to those skilled in the art to which the present invention pertains. It will be apparent to those skilled in the art that the optical apparatus for augmented reality (AR) capable of realizing three-dimensional stereoscopic images and the application thereof according to the embodiments described with reference to FIGs. 1A to 12 may be subject to various substitutions, changes, and modifications without departing from the technical ideas of the present invention. For example, the optical apparatus for augmented reality according to the embodiment may be implemented in the form of a head-mounted display (HMD), and various other modifications may be possible. The scope of the invention is therefore not to be defined by the embodiments described above but by the technical ideas recited in the appended claims.

## Claims

1. An optical apparatus for augmented reality (AR), the optical apparatus comprising:
a plurality of image forming devices configured to form a plurality of different first images; and
an augmented reality optical system configured to transmit the plurality of first images formed by the plurality of image forming devices and a second image, which is an external image viewed by a user, to an ocular organ of the user, wherein
the augmented reality optical system comprises:
an optical waveguide having an incident surface on which the plurality of first images is incident, the optical waveguide being configured to provide movement paths for the plurality of first images and the second image;
at least one reflective mirror disposed in the optical waveguide or on a surface of the optical waveguide, the reflective mirror being configured to reflect the plurality of first images into the optical waveguide; and
at least one partial mirror disposed in the optical waveguide, the partial mirror having characteristics of transmitting the plurality of first images transmitted from the incident surface to the reflective mirror and the second image, which is different from the plurality of first images, the partial mirror being configured to reflect and transmit the plurality of first images, which is reflected by the reflective mirror and transmitted through the optical waveguide, to the ocular organ of the user, and
when the plurality of first images is displayed to the user through the augmented reality optical system, the plurality of first images is formed at different distances from the ocular organ and realized as a three-dimensional stereoscopic image.

2. The optical apparatus according to claim 1, wherein at least one of the reflective mirror and the partial mirror is provided in plural.

3. The optical apparatus according to claim 1, wherein
the plurality of image forming devices comprises a first image forming device and a second image forming device,
the at least one reflective mirror comprises a first reflective mirror and a second reflective mirror,
the first reflective mirror is configured to reflect a 1-1 image formed by the first image forming device into the optical waveguide, and
the second reflective mirror is configured to reflect a 1-2 image formed by the second image forming device into the optical waveguide.

4. The optical apparatus according to claim 1, wherein the plurality of image forming devices comprises a first image forming device and a second image forming device,
the at least one partial mirror comprises a first partial mirror and a second partial mirror,
the first partial mirror is configured to transmit a 1-1 image formed by the first image forming device to the ocular organ of the user, and
the second partial mirror is configured to transmit a 1-2 image formed by the second image forming device to the ocular organ of the user.

5. The optical apparatus according to claim 1, wherein the partial mirror is a dielectric coating layer.

6. The optical apparatus according to claim 1, wherein
the optical waveguide comprises a first waveguide portion and a second waveguide portion, and
the partial mirror is disposed between the first and second waveguide portions.

7. The optical apparatus according to claim 1, wherein the partial mirror is configured not to change an optical path for light transmitted through the partial mirror and to change the optical path for light reflected by the partial mirror.

8. The optical apparatus according to claim 1, wherein the partial mirror has a transmittance of 50 to 80%.

9. The optical apparatus according to claim 1, wherein the partial mirror is disposed between the plurality of image forming devices and the reflective mirror.

10. The optical apparatus according to claim 1, wherein the partial mirror is disposed between the incident surface and the reflective mirror.

11. The optical apparatus according to claim 1, wherein the reflective mirror is a metallic coating layer.

12. The optical apparatus according to claim 1, wherein the augmented reality optical system has a field of view of 20° or more.

13. The optical apparatus according to claim 1, wherein the optical waveguide is configured to reflect light corresponding to each of the plurality of first images a plurality of times through internal reflection.

14. The optical apparatus according to claim 1, wherein
the augmented reality optical system further comprises at least one of at least one additional reflective mirror and at least one additional partial mirror,
the additional reflective mirror is disposed in the optical waveguide or on a surface of the optical waveguide and is configured to reflect light corresponding to an image formed by any one of the plurality of image forming devices into the optical waveguide, and
the additional partial mirror is disposed in the optical waveguide and is configured to transmit light corresponding to an image formed by any one of the plurality of image forming devices and to reflect light corresponding to an image formed by another of the plurality of image forming devices.

15. The optical apparatus according to claim 1, wherein the optical waveguide has a form of eyeglass lenses.
